# EUROPÄISCHE PATENTSCHRIFT

(11) **EP 3 081 080 B1**
(45) Veröffentlichungstag und Bekanntmachung des Hinweises auf die Patenterteilung: **18.07.2018**
(21) Anmeldenummer: 16163554.5
(22) Anmeldetag: 01.04.2016
(51) Int. Cl.: A01K 31/04, A01K 31/14, A01K 31/12, A01K 31/22

(54) **GEFLÜGELHALTEEINRICHTUNG MIT ZUSÄTZLICHEN SITZSTANGEN**
POULTRY REARING DEVICE WITH ADDITIONAL PERCH RODS
DISPOSITIF AVICOLE COMPRENANT DES PERCHOIRS SUPPLEMENTAIRES

(30) Priorität: 13.04.2015 DE 202015101803 U
(43) Veröffentlichungstag der Anmeldung: 19.10.2016
(73) Patentinhaber: Big Dutchman International GmbH, 49377 Vechta (DE)
(72) Erfinder: Auffarth, Volker, 49360 Vechta (DE)
(74) Vertreter: Eisenführ Speiser

(56) Entgegenhaltungen:
- EP-A2- 1 452 092
- US-A- 819 204
- US-A- 977 980
- US-A- 1 623 171
- US-A- 4 315 481

## Beschreibung

Die Erfindung betrifft eine Geflügelhalteeinrichtung, umfassend zumindest ein Legenest, einen ersten Aufenthaltsbereich mit einer perforierten ersten Aufstandsfläche und einen zweiten Aufenthaltsbereich mit einer zweiten Aufstandsfläche zum Auflegen von Einstreumaterial.
Geflügelhalteeinrichtungen dieser Art werden typischerweise zur Haltung von Hühner-Mastelterntieren eingesetzt. Diese Haltung findet vornehmlich in der Bodenhaltung statt. Die Geflügelhalteeinrichtung umfasst zu diesem Zweck ein Legenest für die Eiablage, welches beispielsweise mittig angeordnet sein kann. Weiterhin sind eine oder mehrere erhöhte Ebenen, die den ersten Aufenthaltsbereich darstellen, vorhanden. Diese erhöhten Ebenen weisen eine perforierte Aufstandsfläche auf, durch welche Kot der Tiere hindurchfallen kann. Die Aufstandsflächen können beispielsweise Platten mit zahlreichen Öffnungen sein, ebenso können hier Gitter, Roste und dergleichen zum Einsatz kommen. Unterhalb der ersten Aufstandsfläche kann eine geeignete Einrichtung zum Abtransport des Kots vorhanden, beispielsweise kann dies durch ein Kotförderband erfolgen. Alternativ kann aber auch eine andere, beispielsweise manuell durch eine Person vorzunehmende Entmistung vorgesehen sein.

Neben dieser ersten Aufstandsfläche ist eine zweite Aufstandsfläche vorhanden, die einen zweiten Aufenthaltsbereich bildet. Diese zweite Aufstandsfläche ist typischerweise der Stallboden und ausgebildet, um Einstreu aufzunehmen. Die zweite Aufstandfläche ist daher nicht durchlässig für Kot sondern dient dazu, dass arttypische Scharr- und Pickverhalten des Geflügels zu ermöglichen.
Grundsätzlich kann durch die so bereitgestellten Bereiche eine Geflügelhaltung ermöglicht werden, die artspezifische Verhaltensweisen ermöglicht und artuntypisches Sozialverhalten des gehaltenen Geflügels vermeidet. Es besteht aber ein Bedarf für eine weitere Verbesserung dieser Haltungsform, die eine verbesserte arttypische Haltung ermöglicht, ohne hierbei die Wirtschaftlichkeit der Haltung in entscheidend nachteiliger Weise zu beeinträchtigen.
Aus US 4,315,481 A ist ein Aufzugstall vorbekannt, der einen Scharrbereich und erhöhte Plattformen seitlich des Scharrbereichs aufweist. Die erhöhten Plattformen erstrecken sich über die volle Länge des Stallgebäudes und umfassen Holzstreben, die sich in der Längsrichtung erstrecken.

Aus US 977,980 A ist ein Geflügelsitzplatz bekannt, der aus einer an die Wand herangeklappten Stellung eine Nutzungsstellung herabgeklappt werden kann.
Der Erfindung liegt die Aufgabe zugrunde, eine Geflügelhalteeinrichtung bereitzustellen, welche unter wirtschaftlichen Vorgaben eine verbesserte arttypische Haltung von Geflügel ermöglicht.
Diese Aufgabe wird erfindungsgemäß gelöst durch eine Geflügelhalteinrichtung nach Anspruch 1.
Die Erfindung setzt zunächst darauf auf, dass Geflügeltiere wie beispielsweise Hühnertiere zur Nachtruhe höher gelegene Bereiche aufsuchen. Die Tiere ziehen bei der Suche nach einer Sitzmöglichkeit zur Nachtruhe astähnliche Sitzmöglichkeiten einer ebenen Fläche vor. Für eine verbesserte artgerechte Haltung wäre es daher nach Erkenntnis der Erfinder wünschenswert, solche Sitzmöglichkeiten bereit zu stellen. Nachteilig hieran ist vom Erfinder allerdings identifiziert worden, dass durch solche Sitzmöglichkeiten der innerhalb der Geflügelhalteeinrichtung zu Verfügung stehende Platz in den Aufenthaltsbereichen verringert wird. Dieses Problem wird erfindungsgemäß überwunden, indem eine Sitzstangeneinrichtung bereitgestellt wird, die aus einer ersten in eine zweite Stellung beweglich ist. In der ersten Stellung, welche auch als ausgefahrene Stellung bezeichnet werden könnte, wird durch die Sitzstangeneinrichtung ein Flächenabschnitt der Geflügelhalteeinrichtung überdeckt und hierdurch in der Nutzung eingeschränkt. In dieser ersten Stellung haben die Geflügeltiere die Möglichkeit, auf der Sitzstangeneinrichtung auf einer oder mehreren Sitzstangen zu sitzen und können daher beispielsweise zur Nachtruhe eine artgerechte Sitzposition einnehmen. In der zweiten Stellung ist die Sitzstangeneinrichtung solcher Art bewegt, dass eine geringere Fläche der Geflügelhalteeinrichtung davon überdeckt und dadurch der Nutzung entzogen ist. In dieser zweiten Stellung, die auch als eingefahrene Stellung bezeichnet werden könnte, können die Geflügeltiere daher einen unterhalb der Sitzstangeneinrichtung angeordneten Aufenthaltsbereich betreten, den sie in der ersten Stellung nicht betreten können, weil er durch die Sitzstangeneinrichtung überdeckt wird. In der zweiten Stellung können die Geflügeltiere jedoch nicht die Sitzstangen der Sitzstangeneinrichtung nutzen oder zumindest nicht alle Sitzstangen der Sitzstangeneinrichtung nutzen, das heißt in der zweiten Stellung ist die Möglichkeit der Geflügeltiere, die Sitzstangen der Sitzstangeneinrichtung auf zu suchen, eingeschränkt oder besteht gar nicht.

Erfindungsgemäß wird damit eine Geflügelhalteeinrichtung bereitgestellt, die einerseits tagsüber, andererseits nachts ein arttypisches Verhalten der Geflügeltiere ermöglicht, indem tagsüber die Sitzstangeneinrichtung in die zweite Stellung bewegt werden kann und hierdurch den Geflügeltieren ausreichender Platz innerhalt der Geflügelhalteeinrichtung bereitgestellt wird, nachts aber die Sitzstangeneinrichtung in die erste Stellung bewegt wird, wodurch den Geflügeltieren ein arttypischer, astähnlicher und erhöhter Sitzbereich auf den Sitzstangen zur Verfügung gestellt wird.

Gemäß einer ersten bevorzugten Ausführungsform ist vorgesehen, dass eine der Sitzstangen an einer ersten Rahmenstrebe angeordnet ist, welche beweglich, insbesondere schwenkbar zu einer zweiten Rahmenstrebe gelagert ist. Durch diese Fortbildung wird eine Konstruktion der Sitzstangeneinrichtung erzielt, die einerseits eine robuste Halterung der Sitzstangen in der ersten Stellung, in der die Gewichtskraft der Geflügeltiere durch die Sitzstangeneinrichtung aufzunehmen ist, erzielt wird, andererseits eine konstruktiv einfache Beweglichkeit der Sitzstangen aus der ersten in die zweite Stellung und umgekehrt ermöglicht wird. Es ist zu verstehen, dass die Sitzstange auch an mehreren ersten Rahmenstreben befestigt sein kann, die jeweils beweglich zu entsprechend mehreren zweiten Rahmenstreben gelagert sind. In diesem Fall können die jeweiligen Anordnungen aus ersten und zweiten Rahmenstreben einander übereinstimmend ausgeführt sein und an in Längsrichtung der Sitzstange beabstandeten Orten angeordnet sein, sodass die Sitzstange mehrfach gestützt und geführt ist. Unter einer Rahmenstrebe ist in diesem Fall jegliche Art von Haltelement zu verstehen, das eine Kraft aufnimmt, die durch die Gewichtskraft der Sitzstange, die Gewichtskraft der darauf sitzenden Geflügeltiere und/oder durch Kräfte, die aus der Bewegung der Sitzstangeneinrichtung resultieren.

Noch weiter ist es bevorzugt, dass die zweite Rahmenstrebe Befestigungsmittel zur ortsfesten Befestigung der zweiten Rahmenstrebe aufweist und ein erstes Schwenklager vorzusehen, welches die erste Rahmenstrebe mit der zweiten Rahmenstrebe direkt verbindet, sowie ein Verbindungselement, welches an seinem ersten Ende mit der ersten Rahmenstrebe und an seinem zweiten Ende mit der zweiten Rahmenstrebe verbunden ist. Diese Fortbildung ermöglicht die Befestigung der Sitzstangeneinrichtung in einem beliebigen Bereich der Geflügelhalteeinrichtung. So kann die Sitzstangeneinrichtung beispielsweise und bevorzugt an einer Stallwand oder einer Trennwand innerhalb eines Stallgebäudes befestigt werden, indem die zweite Rahmenstrebe in vertikaler Erstreckungsrichtung an der Wand befestigt wird. Ebenso ist es möglich, die Sitzstangeneinrichtung frei im Bereich einer Bodenaufstandsfläche der Geflügelhalteeinrichtung zu befestigen, indem die zweite Rahmenstrebe an der Aufstandsfläche befestigt wird. Die Befestigung kann dabei mittels Schrauben, Nieten oder sonstigen Befestigungsmitteln erfolgen, die mit der zweiten Rahmenstrebe entsprechend verbunden sind, beispielsweise durch geeignete Bohrungen oder Langlöchern oder der Gleichen in der zweiten Rahmenstrebe. Die erste Rahmenstrebe ist schwenkbar mit der zweiten Rahmenstrebe verbunden. Diese Verbindung ist direkt, dass heißt es existiert eine direkte Verbindung zwischen der ersten und der zweiten Rahmenstrebe mittels eines entsprechenden Verbindungsmittels, das die Schwenkbarkeit ermöglicht. Dabei ist die Bewegung der ersten zur zweiten Rahmenstrebe nicht auf eine reine Schwenkbewegung beschränkt, sondern kann durch andere Bewegungsformen, beispielsweise eine translatorische Bewegung überlagert werden, beispielsweise indem die direkte, schwenkbare Befestigung durch ein translatorisch entlang der ersten und/oder der zweiten Rahmenstrebe bewegliches Befestigungselement erfolgt. Weiterhin ist ein Verbindungselement vorgesehen, das mit der ersten und der zweiten Rahmenstrebe verbunden ist. Dieses Verbindungselement dient dazu, um die erste und/oder die zweite Stellung zu arretierten, insbesondere kann durch dieses Verbindungselement die erste Stellung zu arretiert werden, so dass die erste Rahmenstrebe gegen die Gewichtskraft der Sitzstangen und darauf sitzender Geflügeltiere hierdurch gestützt oder abgestrebt wird. Das Verbindungselement kann in Gestalt einer Strebe, eines Anschlagelementes oder der Gleichen ausgeführt sein, wobei diese Strebe an beiden Rahmenstreben unmittelbar befestigt sein kann oder nur an einer der beiden Rahmenstreben unmittelbar befestigt ist und die Verbindung zu anderen Rahmenstrebe durch eine Anschlagfläche erfolgt.

Dabei ist es noch weiter bevorzugt, wenn das Verbindungselement als Gelenkarm ausgebildet ist und schwenkbar an der ersten und der zweiten Rahmenstrebe befestigt ist. Die Ausgestaltung des Verbindungselementes als Gelenkarm ermöglicht eine robuste und gegenüber Verschmutzungen unempfindliche Abstützung der ersten Rahmenstrebe gegenüber der zweiten Rahmenstrebe. Als Gelenkarm ist hierbei eine Strebe oder Strebenanordnung zu verstehen, die mittels Gelenken direkt mit der ersten Strebe und der zweiten Strebe verbunden ist, wobei diese direkte Verbindung eine Schwenkbewegung der Strebe oder Strebenanordnung relativ zu der ersten beziehungsweise zweiten Rahmenstrebe ermöglicht. Diese Schwenkbewegung kann wiederum durch andere Bewegungen, beispielweise translatorische Bewegungen zwischen dem Gelenkarm und der ersten beziehungsweise zweiten Rahmenstrebe überlagert sein. Eine Strebenanordnung als Gelenkarm kann insbesondere eine Kombination von zwei Streben sein, die ihrerseits verschwenkbar mit einander gekoppelt sind. Eine solche Strebenanordnung als Gelenkarm ermöglicht eine vorteilhafte Bewegung der erste Rahmenstrebe relativ zur zweiten Rahmenstrebe aus der ersten in die zweite Stellung und umgekehrt, indem die wirksame Länge des Gelenkarms durch die Verschwenkung zwischen den beiden Streben gekürzt beziehungsweise verlängert wird.

Noch weiter ist es bevorzugt, dass die Sitzstangeneinrichtung in Einbaulage schwerkraftbetätigt aus der zweiten in die erste Stellung beweglich ist. Diese Ausführungsform erlaubt eine kostengünstige und einfache Konstruktion der Sitzstangeneinrichtung, welche durch Schwerkraft in die erste Stellung fallen kann. Dabei ist zu verstehen, dass hierzu nicht notwendiger Weise der gesamte Bewegungswegs aus der zweiten in die erste Stellung schwerkraftuntersützt sein muss, sondern Teile dieses Bewegungsweges auch durch andere Krafteinflüsse, beispielsweise federunterstützt, erfolgen können.

Dabei ist es noch weiter bevorzugt, wenn eine Sicherungsstrebe, welche die Sitzstangeneinrichtung in der ersten Stellung gegen eine weitere schwerkraftbetätigte Bewegung arretiert, vorgesehen ist. Eine schwerkraftbetätigte Bewegung aus der zweiten in die erste Stellung hat oftmals zur Folge, dass bei Versagen eines Verbindungselementes, welches die Sitzstangeneinrichtung in der ersten Stellung fixiert, eine ungewollte, schwerkraftbetätigte Bewegung der Sitzstangeneinrichtung über die erste Stellung hinaus erfolgt. Diese ungewollte weitere Bewegung kann insbesondere dann, wenn sich Geflügeltiere auf den Sitzstangen befinden, zu Verletzungen der Tiere führen. Gemäß dieser Fortbildungsform ist daher eine Sicherungsstrebe vorgesehen, die eine Arretierung bewirkt, um eine solche ungewollte Bewegung der Sitzstangeneinrichtung zu verhindern. Dabei kann diese Sicherungsstrebe entweder eine unmittelbare Fixierung der Sitzstangeneinrichtung in der ersten Stellung bewirken. Die Sicherungsstrebe kann aber auch so ausgebildet sein, dass sie erst bei Versagen eines Verbindungselementes und daraus resultierendem Bewegen der Sitzstangeneinrichtung aus der ersten Stellung heraus eingreift. Bei dieser Variante wird ein geringfügiges Bewegen der Sitzstangeneinrichtung aus der ersten Stellung heraus in Folge der Schwerkraft in Kauf genommen und die Sicherungsstrebe greift dann sichernd ein und verhindert eine weitere Bewegung und daraus resultierende Verletzungsgefahr. Die Sicherungsstrebe kann insbesondere solcher Art ausgeführt sein, dass sie an der ersten oder zweiten Rahmenstrebe befestigt ist und entsprechend umgekehrt an der zweiten oder ersten Rahmenstrebe mittels einer einhakenden Rastung sich formschlüssig verriegelt und hierdurch die Bewegungssicherung erreicht.

Erfindungsgemäß ist die Geflügelhalteeinrichtung fortgebildet durch eine Aktuatoreinrichtung, die mit der Sitzstangeneinrichtung gekoppelt ist zur Bewegung der Sitzstangeneinrichtung aus der ersten in die zweite Stellung und umgekehrt. Eine solche Aktuatoreinrichtung, die pneumatisch, elektrisch, hydraulisch oder durch Handkraft betätigt sein kann, ermöglicht eine komfortable Bedienung der Sitzstangeneinrichtung, um die Bewegung aus der ersten in die zweite Stellung und umgekehrt vorzunehmen. Die Kopplung der Aktuatoreinrichtung mit der Sitzstangeneinrichtung kann hierbei in unterschiedlicher Weise erfolgen, beispielsweise durch Kopplungselemente in Form von Stangen, Ketten, Bändern, Zahnriemen, Seilen, Bowdenzügen oder der Gleichen.

Dabei ist es besonders bevorzugt, wenn die Aktuatoreinrichtung mit der Sitzstangeneinrichtung mittels eines schlaffen Zugelements gekoppelt ist. Die Verwendung eines schlaffen Zugelements, beispielsweise eines Bandes, Riemens oder der Gleichen, zur Kopplung der Aktuatoreinrichtung mit der Sitzstangenrichtung ermöglicht eine Betätigung der Sitzstangeneinrichtung aus der Aktuatoreinrichtung heraus mit ausreichenden Freiheiten hinsichtlich der Anordnung der Aktuatoreinrichtung und der Sitzstangeneinrichtung in der Geflügelhalteeinrichtung. Ein solches schlaffes Zugelement kann dazu in einfacher Weise geführt, umgelenkt und an den beweglichen Teilen der Sitzstangeneinrichtung solcher Art befestigt werden, um die Bewegung aus der ersten in die zweite Stellung und umgekehrt zu bewirken.

Noch weiter ist es bevorzugt, dass die Aktuatoreinrichtung einen Elektromotor umfasst, dessen Ausgangswelle eine Bandrolle antreibt, auf der ein Band, welches an der Sitzstangeneinrichtung befestigt ist, bei Rotation des Elektromotors auf- und abgewickelt werden kann. Durch diese Ausführungsform wird eine effiziente und robuste Bewegung der Sitzstangeneinrichtung ermöglicht und zugleich eine hinsichtlich der Anordnung und Befestigung der Sitzstangeneinrichtung und der Aktuatoreinrichtung andererseits ausreichende Freiheit und Variabilität geschaffen, um die erfindungsgemäße Sitzstangeneinrichtung in Geflügelhalteeinrichtungen unterschiedlichster Bauweise einzusetzen. Die Bandrolle kann hierbei unmittelbar auf der Ausgangswelle des Elektromotors drehmomentfest befestigt sein. Ebenso kann die Bandrolle auf einer vom Elektromotor angetriebenen Welle befestigt sein, die eine unter- oder übersetzte Rotation gegenüber dem Elektromotors ausführt.

Die Geflügelhalteeinrichtung ist weiterhin fortgebildet durch eine Steuerungseinheit, welche mit der Aktuatoreinrichtung signaltechnisch gekoppelt ist und ausgebildet ist, um die Sitzstangeneinrichtung abends aus der zweiten Stellung in die erste Stellung zu bewegen und morgens aus der ersten Stellung in die zweite Stellung zu bewegen. Mittels einer solchen Steuerungseinheit, die insbesondere als elektronische Steuerungseinheit ausgeführt sein kann, wird eine an den Tag-Nacht-Rhythmus der Geflügeltiere angepasste Ansteuerung der Aktuatoreinrichtung bereitgestellt und die jeweils artgerechte Stellung der Sitzstangeneinrichtung für die Tageszeit und die Nachtzeit erreicht.

Dabei kann insbesondere vorgesehen sein, dass die Steuerungseinheit ausgebildet ist, um die Bewegung aus der ersten in die zweite Stellung und/oder umgekehrt innerhalb eines Zeitraums durchzuführen, der nicht kürzer als zwei, vorzugsweise nicht kürzer als fünf Sekunden ist. Mittels einer solchen Verstellung über einen vorbestimmten Mindestzeitraum wird sichergestellt, dass durch die Verstellung aus der ersten in die zweite Stellung oder umgekehrt keine Verletzungsgefahr für die Geflügeltiere hervorgerufen wird, die sich auf den Sitzstangen befinden oder im Bereich unterhalb der Sitzstangeneinrichtung sich befinden. Durch eine solche langsame Bewegung wird erreicht, dass die aufsitzenden Geflügeltiere während des Einfahrvorganges und des daraus resultierenden abnehmenden Sitzplatzangebotes genügend Zeit finden, um die Sitzstangen in Ruhe zu verlassen.

Noch weiter ist bevorzugt vorgesehen, dass die erste und die zweite Rahmenstrebe in einem ersten Strebensatz umfasst sind und ein zweiter Strebensatz vorhanden ist, der in Längsrichtung der Sitzstangen beabstandet zu dem ersten Strebensatz angeordnet ist und eine zu dem ersten Strebensatz übereinstimmende Bewegung der Sitzstangeneinrichtung ausführt. Mit dieser Fortbildungsform wird eine stabile Abstützung auch sich lang erstreckender Sitzstangen erzielt. Es ist zu verstehen, dass hierbei zwei, drei oder noch mehr Strebensätze eingesetzt werden können, wobei nur einer, nur zwei oder einige von mehreren Strebensätzen mittels eines Aktuators über eine entsprechende Kopplung betätigt werden können, um die Sitzstangeneinrichtung aus der ersten in die zweite Stellung zu bewegen und umgekehrt. Andere Strebensätze können demgegenüber lediglich eine Führung der Sitzstangen bewirken und diese Sitzstangen in der ersten Stellung halten und gegen die Schwerkraft der auf den Sitzstangen sitzenden Geflügeltiere abstützen.
Gemäß einer weiteren bevorzugten Ausführungsform ist vorgesehen, dass die zweite Rahmenstrebe eine erste Schwenklagerung an einem ersten Ende aufweist und hiermit schwenkbar an einem den Aufenthaltsbereich begrenzenden Wandabschnitt befestigt ist und die erste Rahmenstrebe an einem ersten Ende schwenkbar mit der zweiten Rahmenstrebe verbunden ist und ein zweites Ende der ersten Rahmenstrebe aus einer abgesenkten Position, in der das zweite Ende auf der ersten oder der zweiten Aufstandsfläche aufliegt, in eine angehobene Position bewegt werden kann, in der das zweite Ende oberhalb und in einem Abstand zu der ersten bzw. zweiten Aufstandsfläche sich befindet.
Weiterhin ist es bevorzugt, dass die erste Rahmenstrebe in der angehobenen Position durch einen Anschlag zwischen der ersten und der zweiten Rahmenstrebe in einer vorbestimmten Winkelstellung zu der zweiten Rahmenstrebe steht und in der abgesenkten Position in einer hiervon abweichenden Winkelstellung zu der zweiten Rahmenstrebe steht.

Ein weiterer Aspekt der Erfindung ist eine Sitzstangeneinrichtung gemäß Anspruch 16 für eine Geflügelhalteeinrichtung. Die so definierte Sitzstangeneinrichtung eignet sich zum Einsatz in Geflügelhalteeinrichtungen unterschiedlicher Ausgestaltung und kann insbesondere zur Nachrüstung von bestehenden Geflügelhalteeinrichtungen eingesetzt werden. Dabei ist zu verstehen, dass diese Sitzstangeneinrichtung insbesondere gemäß der zuvor erläuterten Vorteile, Eigenschaften und Merkmale der Sitzstangeneinrichtung ausgebildet und fortgebildet werden kann, welche im Zusammenhang mit der Geflügelhalteeinrichtung zuvor beschrieben wurde.

Die erfindungsgemäße Sitzstangeneinrichtung kann insbesondere mehrere, sich parallel erstreckende Sitzstangen umfassen, wobei vorzugsweise eine oder mehrere dieser Sitzstangen an der ersten Rahmenstrebe befestigt sind und eine oder mehrere dieser Sitzstangen an dem Verbindungselement befestigt sind. Dabei kann insbesondere, wenn das Verbindungselement durch eine Gelenkstange, bestehend aus zwei miteinander gelenkig gekoppelten Gelenkstreben besteht, vorgesehen sein, dass an jeder Gelenkstrebe zumindest eine Sitzstangen befestigt ist. Mit dieser Fortbildungsform werden in vorteilhafter Weise mehrere Sitzstangen in der ersten Stellung bereitgestellt und somit eine große Anzahl von Sitzplätzen für die Nachtruhe der Geflügeltiere erzeugt. Zugleich können diese mehreren Sitzstangen dann in der zweiten Stellung platzsparend und ohne einen nennenswerten Flächenbereich in der Geflügelhalteeinrichtung zu beanspruchen, angeordnet werden.

Eine bevorzugte Ausführungsform der Erfindung wird anhand der beiliegenden Figuren beschrieben. Es zeigen:
Figur 1 eine perspektivische Ansicht eines Ausschnitts eines Hühnerstalls nach dem Stand der Technik,
Figur 2 eine perspektivische Ansicht eines Ausschnitts eines Hühnerstalls nach der Erfindung in Tagstellung,
Figur 3 einen Ausschnitt gemäß Figur 2 in Nachtstellung,
Figur 4 eine Seitenansicht einer erfindungsgemäßen Sitzstangeneinrichtung in Nachtstellung,
Figur 5 eine Seitenansicht einer erfindungsgemäßen Sitzstangeneinrichtung in Einbausituation an einer Seitenwand in Tagstellung,
Figur 6 einen Ausschnitt aus Figur 5,
Figur 7 eine perspektivische Ansicht einer zweiten Ausführungsform in Nachtstellung,
Figur 8 eine perspektivische Ansicht der zweiten Ausführungsform in Tagstellung,
Figur 9 eine Seitenansicht einer dritten Ausführungsform der Erfindung in Tagstellung,
Figur 10 eine teilausgefahren Position der Ausführungsform gemäß Figur 9,
Figur 11 eine ausgefahrene Position der Ausführungsform gemäß Figur 9 in Nachtstellung und
Figur 12 eine teileingefahrene Position der Ausführungsform gemäß Figur 9.

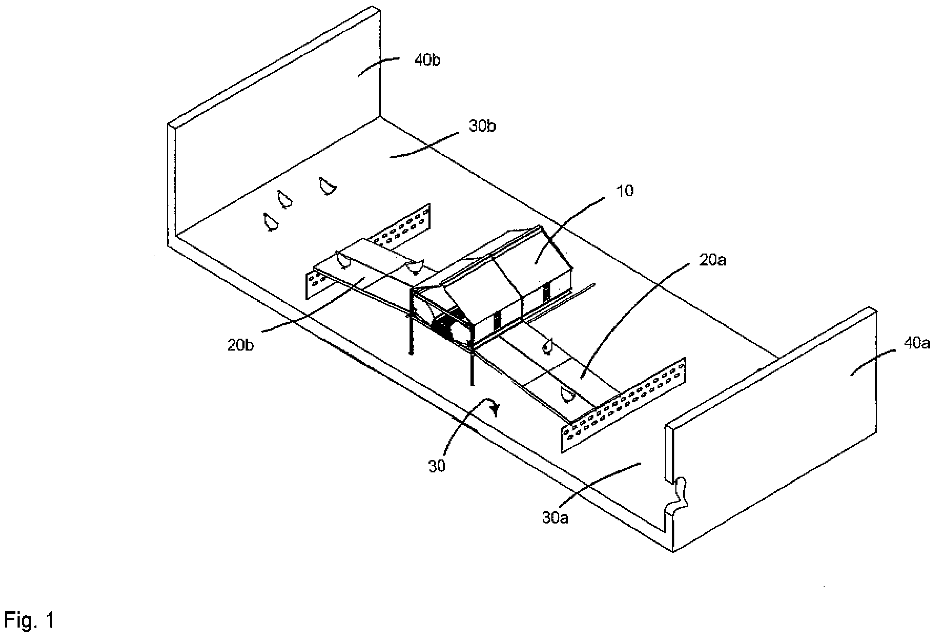

In Figur 1 ist ein Ausschnitt aus einem Hühnerstall zu sehen, der zur Bodenhaltung von Hühnern dient. Eine mittig und sich in Längsrichtung des Stalls erstreckende Nesteinrichtung 10 stellt einen abgedunkelten Rückzugsbereich für die Hühner zur Eiablage bereit. Dieser Nestbereich 10 kann über Gitterroste 20a,b von beiden Seiten aus durch die Hühner betreten werden.
Die Nesteinrichtung 10 sowie die Gitterroste 20a,b sind gegenüber einem Stallboden 30 erhöht angeordnet, sodass Kot, der von den Hühnern abgesetzt wird, in einen Bereich unterhalb der Nesteinrichtung 10 und der Gitterroste 20a,b fallen kann. In diesem unteren Bereich sind bei der dargestellten Ausführungsform keine Kotbänder oder dergleichen vorgesehen, da hier eine manuelle Entmistung vorgesehen ist. Es können aber zum Zwecke einer automatischen Entmistung Transporteinrichtungen (nicht dargestellt) in Gestalt von beispielsweise Förderbändern angeordnet, um die herabfallenden Exkremente aus dem Stall abzutransportieren.
Ausgehend von der mittig angeordneten Nesteinrichtung 10 erstrecken sich die Gitterroste 20a,b über jeweils etwa ein Viertel der gesamten Stallbreite, sodass zwischen dem außenliegenden Ende der Gitterroste 20a,b und einer den Stall begrenzenden Stallwand 40a,b ein Aufenthaltsbereich 30a,b auf dem Stallboden 30 für die Hühner vorhanden ist. In diesem Aufenthaltsbereich auf dem Stallboden ist Einstreu (nicht dargestellt) vorhanden, welches dem natürlichen Scharr- und Pickverhalten der Hühner dient.

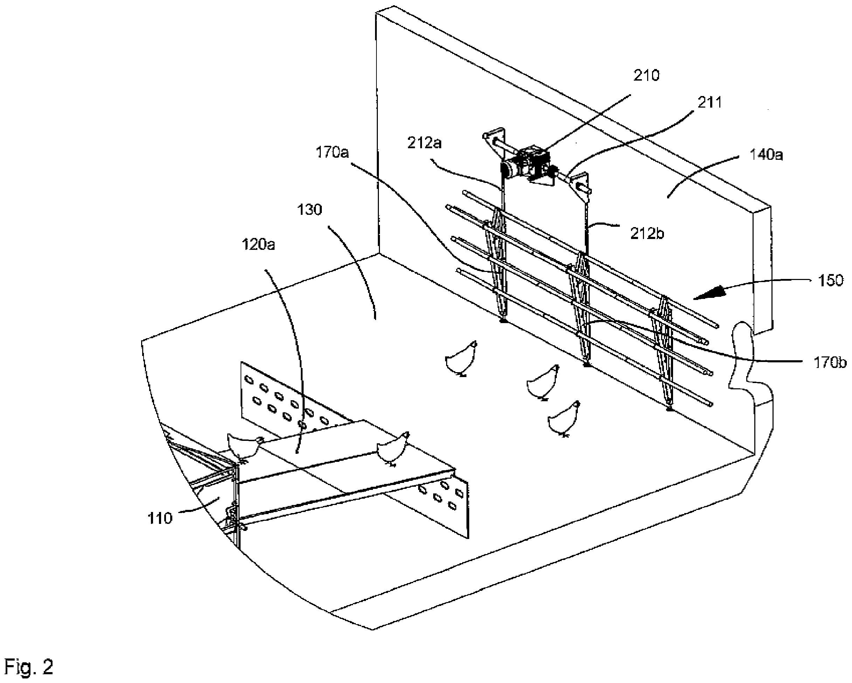

Figur 2 zeigt einen Ausschnitt einer erfindungsgemäßen Stalleinrichtung. Zu erkennen ist einerseits wiederum ein mittig angeordneter Nestbereich 110, an den sich ein erhöht angeordneter Gitterrost 120a anschließt, der sich in Richtung einer Außenwand 140a erstreckt und über etwa ein Viertel der gesamten Breite des Stalls verläuft. Zwischen dem außenliegenden Ende des Gitterrostes 120a und der Stallwand 140a ist ein Stallbodenbereich für die Hühner vorgesehen, indem diese in Einstreu scharren und picken können.

Im Bereich dieses Bodenhaltungsabschnitts 130a ist eine Sitzstangeneinrichtung 150 vorhanden, die in Figur 2 in der eingefahrenen Tagstellung gezeigt ist. Die Sitzstangeneinrichtung 150 ist an der Außenwand 140a befestigt, indem drei Strebensätze an der Stallwand 140a verschraubt sind und diese Strebensätze mit insgesamt sechs Sitzstangen, die sich in Längsrichtung des Stalls parallel zur Erstreckung der Nesteinrichtung erstrecken, verbunden sind.

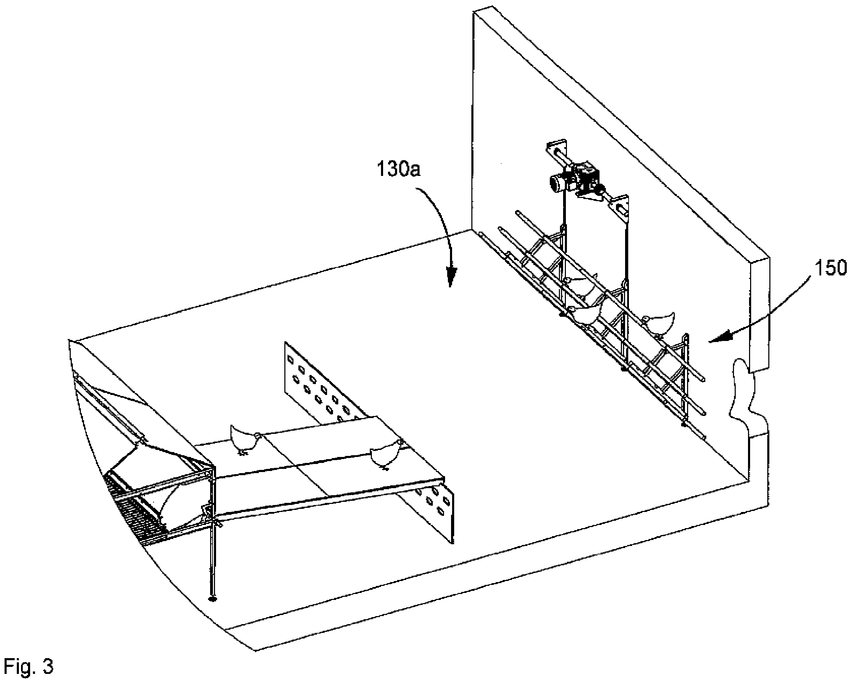

Oberhalb der Sitzstangen ist ein Elektromotor 210 an der Stallwand 140a befestigt, der über eine Abtriebswelle 211 zwei Bänder 212a,b auf- und abwickeln kann. Die Bänder 212a,b sind an den gegenüberliegenden Enden der Abtriebswelle 211 angeordnet, die mittels eines Winkelgetriebes mit Untersetzung etwa mittig durch den Elektromotor 210 angetrieben wird. Die Bänder 212a,b erstrecken sich ausgehend von der Welle 211 nach unten und werden im Bereich des linken Strebensatzes 170a und des mittleren Strebensatzes 170b zu einem Befestigungspunkt umgelenkt. Der Befestigungspunkt ist mit einer beweglichen Rahmenstrebe gekoppelt, sodass durch Auf- und Abwickeln der Bänder 212a,b die Sitzstangeneinrichtung aus der dargestellten, eingefahrenen Tagstellung in die in Figur 3 gezeigte ausgefahrene Nachtstellung verfahren werden kann.

In Figur 3 ist die Stangeneinrichtung 150 in einem abgeklappten, ausgefahrenen Zustand, der für die Nachtruhe der Tiere vorgesehen ist. Die Hühner können die Sitzstangen nun betreten und darauf in einer erhöhten Position gegenüber dem Stallboden sitzen, was der arttypischen Sitzposition auf einem astähnlichen Gegenstand in erhöhter Position nahe kommt.

Gegenüber der in Figur 2 dargestellten eingefahrenen Position, in welcher die Sitzstangeneinrichtung keinen Bereich des Bodens 130a überdeckt und dadurch für die Tiere nicht zugänglich macht wird in Figur 3 nun ein Bereich unterhalb der Sitzstangeneinrichtung überdeckt, sodass der Bodenabschnitt 130a für die Hühner nicht vollständig nutzbar ist.

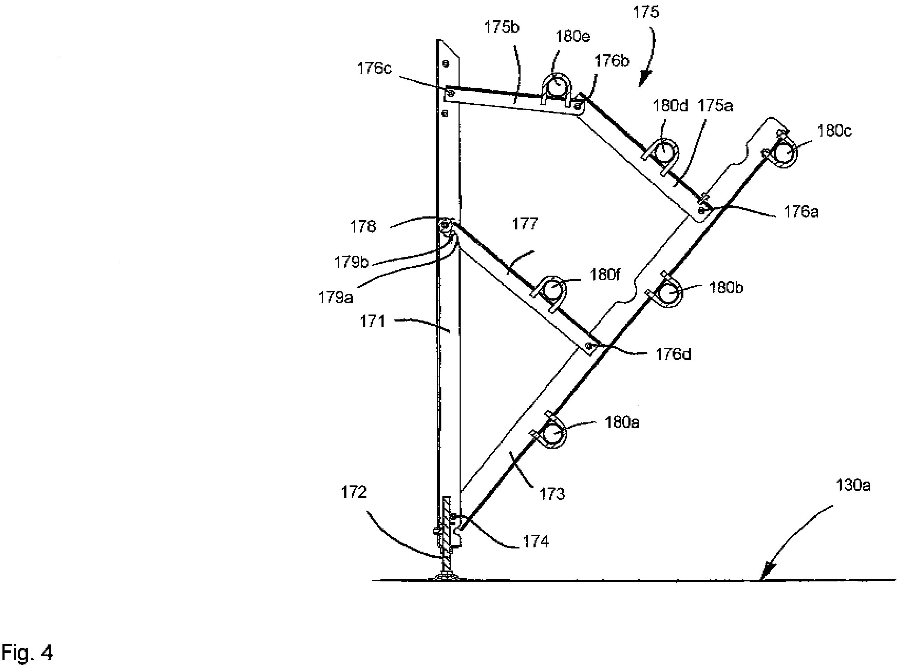

Figur 4 zeigt eine Seitenansicht der erfindungsgemäßen Sitzstangeneinrichtung. Die Sitzstangeneinrichtung umfasst eine sich in vertikaler Richtung erstreckende Strebe 171, die an der Stallwand fest verschraubt werden kann. Diese Wandstrebe 171 wird zusätzlich durch einen höhenverstellbaren Fuß 172 auf dem Stallboden abgestützt, sodass die Gewichtskraft der Sitzstangeneinrichtung und der darauf sitzenden Hühner zuverlässig getragen werden kann. Am unteren Ende der Wandstrebe 171 ist eine Rahmenstrebe 173 schwenkbar mittels eines Schwenkgelenks 174 befestigt. Die Rahmenstrebe 173 erstreckt sich ausgehend von dieser Gelenklagerung am unteren Ende der Wandstrebe 171 in der dargestellten, ausgefahrenen Stellung nach schräg oben. An der Rahmenstrebe 173 sind insgesamt drei Sitzstangen 180a-c befestigt. Die Rahmenstrebe 173 ist ebenso wie die Wandstrebe 171 als U-Profil ausgeführt und in Figur 4 in einer längsgeschnittenen Ansicht abgebildet.

Zwischen der oberen Sitzstange 180c und der mittleren Sitzstange 180b ist eine Doppelgelenkstrebenanordnung 175 an der Rahmenstrebe 173 befestigt. Die Doppelgelenkstrebenanordnung 175 ist mittels eines ersten Gelenks 176a schwenkbar mit der Rahmenstrebe 173 verbunden. Ausgehend von dieser Gelenkverbindung erstreckt sich ein Knickarm 175a zu einer weiteren Gelenkverbindung 176b, an welcher der erste Knickarm 175a mit einem zweiten Knickarm 175b gelenkig verbunden ist. Dieser zweite Knickarm 175b erstreckt sich ausgehend von der Gelenkverbindung 176b mit dem ersten Knickarm 175a bis zu dem Wandprofil 171 und ist am obenliegenden Ende des Wandprofils 171 mit diesem über ein Gelenk 176c wiederum gelenkig verbunden.

Die Doppelgelenkstrebenanordnung, bestehend aus den Knickarmen 175a,b und den Gelenken 176a-c stellt eine Arretierungsvorrichtung dar, welche ein ungewolltes Verschwenken der Rahmenstrebe 173 über die in Figur 4 gezeigte Winkelstellung weiter abwärts Richtung Boden 130a verhindern kann. Sowohl an dem ersten Knickarm 175a als auch dem zweiten Knickarm 175b ist wiederum eine Sitzstange 180d,e befestigt.

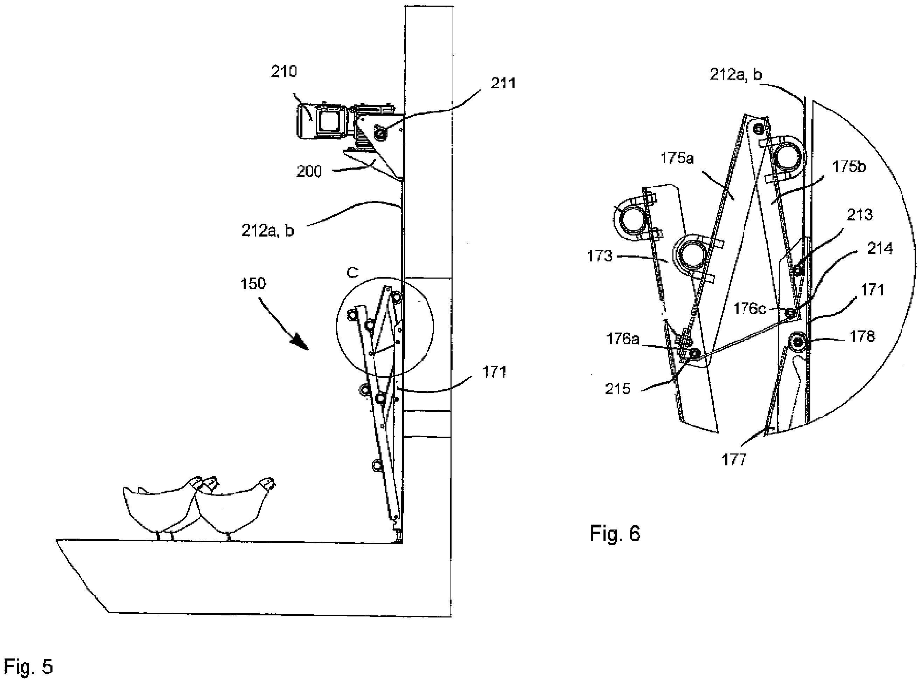

Zwischen der mittleren Sitzstange 180b und der unteren Sitzstange 180a an der Rahmenstrebe 173 ist ein Fangarm 177 gelenkig an der Rahmenstrebe 173 mittels eines Gelenks 176d befestigt. An dem Fangarm 177 ist eine sechste Sitzstange 180f befestigt. Der Fangarm 177 erstreckt sich in Richtung der Wandstrebe 171 und trägt an seinem zur Wandstrebe 171 weisenden Ende eine Führungsrolle 178, die an der Wandstrebe 171 aufwärts und abwärts rollen kann, wenn die Sitzstangeneinrichtung aus der abgebildeten ersten, ausgefahrenen Stellung in die in den Figuren 2 und 5 abgebildete, eingefahrene zweite Stellung bewegt wird.

Weiterhin ist an diesem zweiten Ende des Fangarms 177 eine Ausnehmung 179a in den Fangarm ausgebildet, die in der abgebildeten Stellung an einem fest mit der Wandstrebe 171 verbundenen Befestigungselement 179b eingerastet ist. Durch diese Rastwirkung zwischen der Ausnehmung 179a und dem Befestigungselement 179b, das beispielsweise als Schraube, Bolzen oder der Gleichen ausgeführt sein kann, wird die Rahmenstrebe 173 in der gezeigten, schrägstehenden Position durch den Fangarm 177 gehalten.

Sämtliche Sitzstangen 180a-f erstrecken sich parallel zueinander in Längsrichtung der Sitzstangeneinrichtung und senkrecht zu der Wandstrebe 171, der Rahmenstrebe 173 und den beiden Knickarmen 175a,b sowie dem Fangarm 177. Die Gelenkverbindungen 174, 176a-d weisen jeweils Schwenkachsen auf, die voneinander beabstandet sind und ebenfalls parallel zueinander verlaufen. Diese Schwenkachsen aller Gelenke verlaufen parallel zu der Längserstreckung der Sitzstangen 180a-f.

Figur 5 zeigt die Sitzstangeneinrichtung 150 in einer eingefahrenen Stellung. Oberhalb der Sitzstangen ist mittels eines Rahmenbocks 200 der Getriebemotor 210 an der Stallwand befestigt, der die Abtriebswelle 211 antreibt. Die Abtriebswelle erstreckt sich parallel zu den Sitzstangen 180a-f. Auf der Abtriebswelle 211 wird der Antriebsgurt 212a,b auf- beziehungsweise abgewickelt, je nach Drehrichtung des Getriebemotors 210. Der Antriebsgurt 212a,b erstreckt sich ausgehend von der Abtriebswelle 211 nach unten in Richtung der Wandstrebe 171.

Wie in größeren Detail aus Figur 6 erkennbar wird der Antriebsgurt 212a,b im Bereich des oberen Endes der Wandstrebe 171 mittels einer ersten Gurtumlenkungsrolle 213 und einer zweiten Gurtumlenkungsrolle 214 in eine Richtung, die schräg nach unten von der Stallwand weg weist, umgelenkt. Die zweite Gurtumlegungskrolle 214 ist hierbei koaxial zu dem Gelenk 176c ausgebildet, welches den zweiten Knickarm 175b mit der Wandstrebe 171 schwenkbar koppelt.

Der Antriebsgurt 212a,b erstreckt sich dann ausgehend von der zweiten Gurtumlenkrolle 214 zu einer dritten Gurtumlenkrolle 215, die koaxial und integral mit der Gelenkverbindung 176a ausgeführt ist, die den ersten Knickarm 175a mit der Rahmenstrebe 173 gelenkig verbindet. Hinter dieser dritten Umlenkung des Antriebsgurts ist der Gurt an dem zu der Rahmenstrebe 173 weisenden Ende des Knickarms 175a befestigt.

Durch diesen Verlauf kann durch Spannen des Antriebsgurts die Sitzstangeneinrichtung aus der in Figur 4 gezeigten, ausgefahrenen Nachtstellung in die in Figur 5 gezeigt, eingefahrene Tagstellung bewegt werden. Dabei verschwenken die Knickarme 175a,b zueinander gegenläufig, sodass das Verbindungsgelenk 176b zwischen diesen beiden Knickarmen sich aufwärts bewegt. Der Fangarm 177 wird mittels der Führungsrolle 178, die entlang der Wandstrebe 171 nach oben läuft, ebenfalls nach oben verschwenkt.

In der in Figur 5 und 6 gezeigten eingefahrenen Stellung wird die Sitzstangeneinrichtung durch den Antriebsgurt gehalten. In der in Figur 4 gezeigten, ausgefahrenen Stellung wird die Sitzstangeneinrichtung durch den eingerasteten Fangarm gehalten, der Antriebsgurt wird hierdurch entlastet und trägt nicht zur Arretierung der ausgefahrenen Stellung und der Aufnahme des Gewichts der aufsitzenden Geflügeltiere bei. Die Knickarme 175a,b sind in der Nachtstellung in einer abgewinkelten Anordnung mit einem nach unten weisenden Knickwinkel von weniger als 180°angeordnet und können daher nur in einer Richtung rückverschwenken.
Die Sitzstangeneinrichtung ist bei der bevorzugten Ausführungsform in einer Montageanordnung an der Stallwand gezeigt und für die Geflügeltiere aus dem Aufenthaltsbereich auf dem Stallboden 130a. aus zugängig. Es ist zu verstehen, dass die erfindungsgemäße Sitzstangeneinrichtung in anderen Ausführungsformen auch an einer anderen Stelle der Stalleinrichtung angeordnet sein kann und beispielsweise auch für die Geflügeltiere aus dem Aufenthaltsbereich auf den Gitterrosten 120a,b aus zugänglich sein kann.

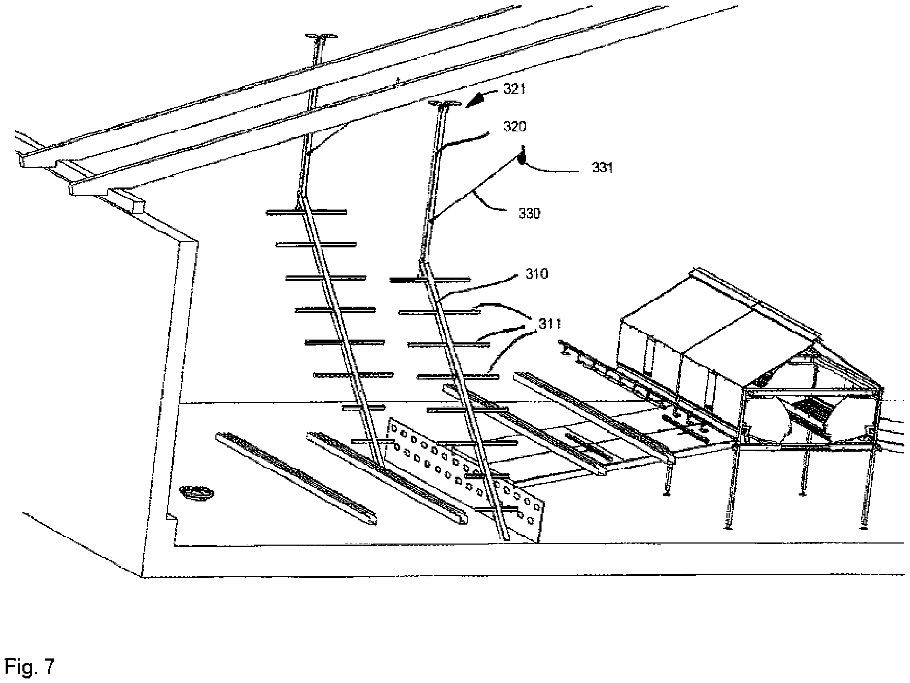

Figur 7 zeigt eine perspektivische Ansicht einer zweiten Ausführungsform aber nicht gemäß der Erfindung. Bei dieser zweiten Ausführungsform ist eine zweite Rahmenstrebe 320 mit einem Ende 321 schwenkbar innerhalb des Hühnerstalls befestigt, diese Befestigung kann beispielsweise an einer Seitenwand oder an der Stalldecke des Hühnerstalls erfolgen, wobei die Seitenwand durch eine Giebelwand, eine Längswand, eine mittige Trennwand oder sonstige Trennwände des Geflügelstalls gebildet werden kann und kann auch durch ein Gitterelement oder dergleichen ausgeführt sein. Das andere Ende der zweiten Rahmenstrebe ist gelenkig mit einer ersten Rahmenstrebe 310 verbunden. Die Schwenkachsen der gelenkigen Verbindungen am ersten und am zweiten Ende der zweiten Rahmenstrebe sind parallel zueinander.
Wie aus Figur 7 ersichtlich, kann die zweite Rahmenstrebe bei einer wandseitigen Befestigung in der abgesenkten Position an der Wand anliegen und die erste Rahmenstrebe steht abgewinkelt zu der zweiten Rahmenstrebe. Wird die Sitzstangenanordnung an der Decke oder einem entsprechenden Deckenprofil oder dergleichen befestigt, so hängt die zweite Rahmenstrebe in dieser Stellung frei herab. Das der Gelenkverbindung zur zweiten Rahmenstrebe gegenüberliegende Ende der ersten Rahmenstrebe liegt auf der Bodenaufstandsfläche des Geflügelstalls auf und stützt sich hierdurch ab. An der ersten Rahmenstrebe sind eine Vielzahl von Sitzstangen 311 befestigt, die sich gewähr und beidseits zur ersten Rahmenstrebe erstrecken. Auf diesen Sitzstangen können Hühner in der abgesenkten Position sitzen.

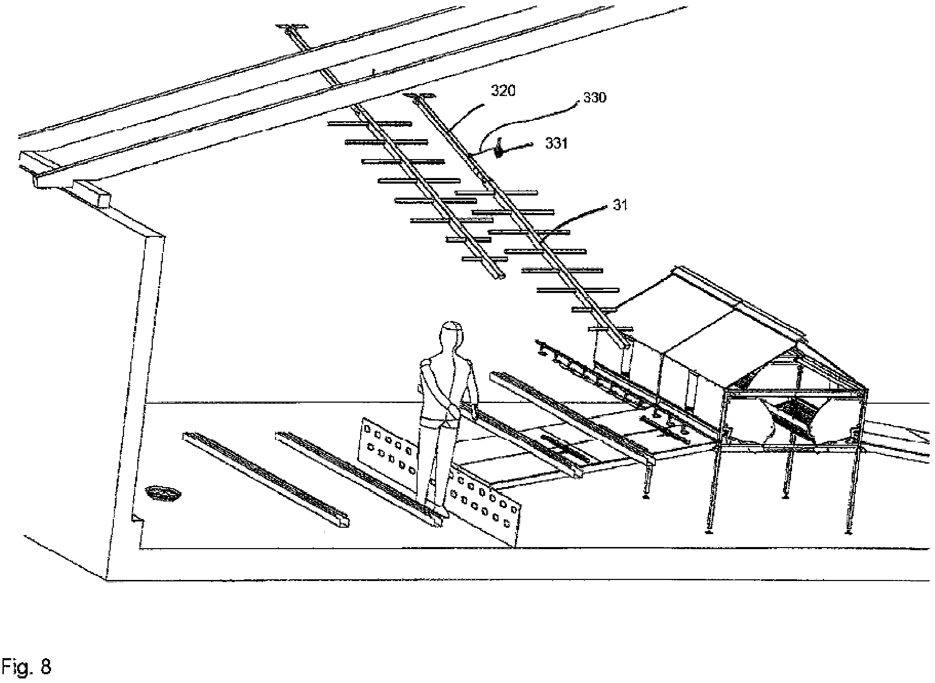

Die zweite Ausführungsform ermöglicht es auch, die Sitzstangenanordnung in eine in Fig. 8 dargestellte angehobene Position zu bringen. In dieser angehobenen Position wird die zweite Rahmenstrebe durch einen Seilzug 330, der mit einer Rolle 331 verbunden ist, angehoben. Der Anhebevorgang kann beispielsweise mittels eines Aktuators erfolgen, der die Rolle antreibt oder mittels eines Aktuators, der das Seil anderweitig einzieht und die Rolle als Umlenkrolle hierbei einsetzt. Die Rolle bzw. Umlenkrolle 331 kann dabei bevorzugt unter und an der Stalldecke oder einer Deckenstrebe oder dergleichen montiert sein.

Durch diesen Anhebevorgang wird die zweite Rahmenstrebe aus ihrer an der Wand anliegenden bzw. frei hängenden Position verschwenkt. Bei einem vorbestimmten Verschwenkungsgrad, bei diesem Ausführungsbeispiel dann, wenn die erste und zweite Rahmenstrebe fluchtend, in einem Winkel von 180° zueinanderstehen, wird durch einen Anschlag diese Winkelposition zwischen der ersten und zweiten Rahmenstrebe fixiert und die erste Rahmenstrebe gemeinsam mit der zweiten Rahmenstrebe verschwenkt und angehoben. Dieser Anschlag kann beispielsweise funktionell bewirkt werden, indem die erste Rahmenstrebe beabstandet von dem zweiten Ende der zweiten Rahmenstrebe an der zweiten Rahmenstrebe schwenkbar befestigt ist und hierdurch das zweite Ende der zweiten Rahmenstrebe die erste Rahmenstrebe in der Winkelstellung von 180° zwischen den beiden Rahmenstreben abstützt.

In dieser fluchtenden Ausrichtung zueinander können die beiden Rahmenstreben dann durch weiteres Hochziehen der zweiten Rahmenstrebe gemeinsam angehoben werden bis in eine Position, in welcher eine Reinigung des Geflügelstalls bequem möglich ist.

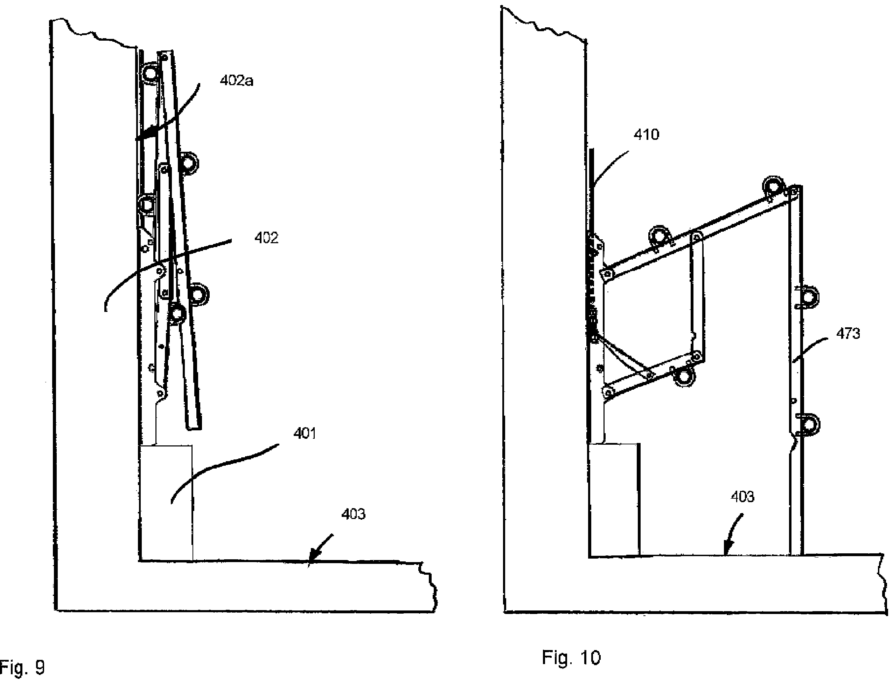

In den Figuren 9-12 ist eine weitere Ausführungsform der Erfindung gezeigt. Bei dieser Ausführungsform ist die Sitzstangenanordnung oberhalb einer Aufmauerung 401 an einer Wand 402 befestigt. Die Sitzstangenanordnung kann sich hierbei auf der Oberseite der Aufmauerung 401 abstützen oder frei an der Wand 402 befestigt sein. Figur 9 zeigt die Sitzstangenanordnung in der eingeklappten Position. Wie ersichtlich ist, kann bei dieser Ausführungsform der Stallboden bis zur Aufmauerung mit einem geeigneten Reinigungswerkzeug sauber geschoben werden, ohne dass hierbei ein Kontakt mit der Sitzstangenanordnung auftritt und eine Beschädigung der Sitzstangenanordnung auftreten könnte. Die Aufmauerung bildet hierbei eine vorstehende Bodenleiste, die gegenüber der Innenseite 402a, der Seitenwand 402 vorsteht und sich um einen bestimmten Betrag über den Boden 403 erhebt.

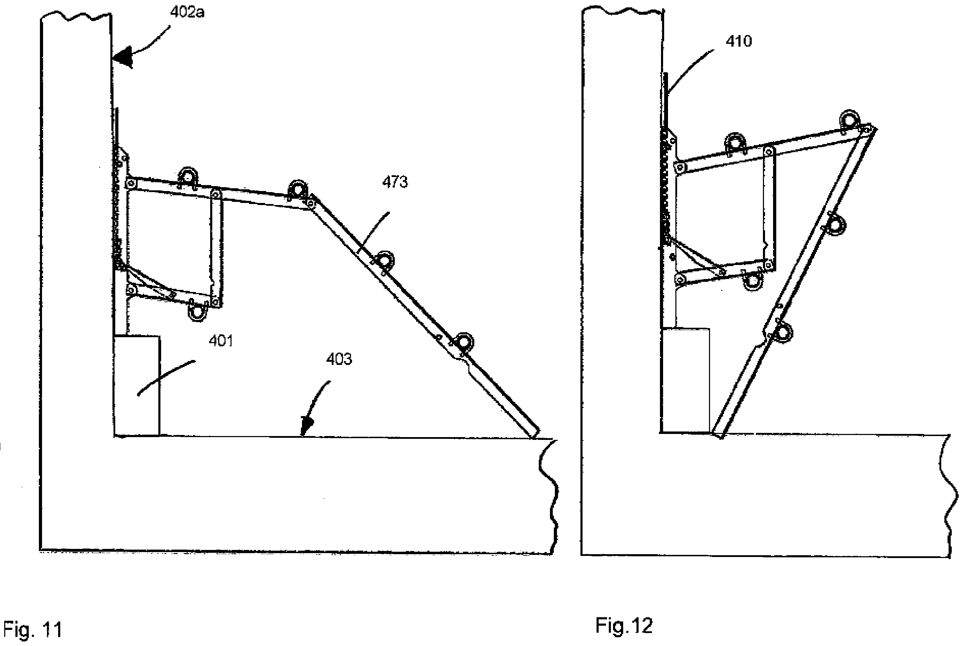

Figur 10 zeigt die Sitzstangenanordnung gemäß Figur 9 in einer abgeklappten Position. Die ist die Position, welche nach Ausfahren der Sitzstangenanordnung über einen Seilzug 410 eingenommen wird. Wie ersichtlich, stützt sich die Rahmenstrebe 473 mit ihrem der Gelenkanordnung gegenüber liegendem Ende auf dem Boden 403 ab, sodass eine entlastete Position vorliegt. Aus dieser Position kann die Sitzstangenanordnung dann weiter in die Figur 11 gezeigte ausgefahrene Position manuell verschwenkt werden und bietet in dieser Position die gewünschten, zusätzlichen Sitzmöglichkeiten für die Nutztiere.

Figur 12 zeigt die Sitzstangenanordnung gemäß Figur 9 in einer manuell eingefahren Position. Wie ersichtlich, ist die Rahmenstrebe 473 hierbei soweit manuell eingeklappt, dass sich ihr der Gelenkanordnung gegenüber liegendes Ende in der Ecke zwischen der Aufmauerung 401 und dem Boden 403 abstützt und somit eine entlastete Position vorliegt. Aus dieser manuell eingefahren Position kann die Sitzstangenanordnung nun durch Zug an dem Seilzug 410 weiter eingefahren werden, um die in Figur 9 dargestellte eingefahrene Position einzunehmen.

## Patentansprüche

1. Geflügelhalteeinrichtung, umfassend:
- zumindest ein Legenest (110),
- einen ersten Aufenthaltsbereich (120a) mit einer perforierten ersten Aufstandsfläche,
- einen zweiten Aufenthaltsbereich (130a) mit einer zweiten Aufstandsfläche zum Auflegen von Einstreumaterial,
**gekennzeichnet durch**
- eine Sitzstangeneinrichtung (150), die zumindest eine gegenüber der ersten oder zweiten Aufstandsfläche erhöht angeordnete Sitzstange (180a-f) aufweist, welche beweglich relativ zu der ersten beziehungsweise zweiten Aufstandsfläche ist, wobei die Sitzstange aus einer ersten Stellung in eine zweite Stellung, in der die Sitzstangeneinrichtung eine kleinere Fläche der ersten bzw. zweiten Aufstandsfläche überdeckt als in der ersten Stellung, beweglich ist,
- eine Aktuatoreinrichtung (210), die mit der Sitzstangeneinrichtung gekoppelt ist zur Bewegung der Sitzstangeneinrichtung aus der ersten in die zweite Stellung und umgekehrt,
- eine Steuerungseinheit, welche mit der Aktuatoreinrichtung signaltechnisch gekoppelt ist und ausgebildet ist, um die Sitzstangeneinrichtung abends aus der zweiten Stellung in die erste Stellung zu bewegen und morgens aus der ersten Stellung in die zweite Stellung zu bewegen.

2. Geflügelhalteeinrichtung nach Anspruch 1,
**dadurch gekennzeichnet, dass** eine der Sitzstangen an einer ersten Rahmenstrebe angeordnet ist, welche beweglich, insbesondere schwenkbar zu einer zweiten Rahmenstrebe gelagert ist.

3. Geflügelhalteeinrichtung nach Anspruch 2,
**dadurch gekennzeichnet, dass** die zweite Rahmenstrebe Befestigungsmittel zur ortsfesten Befestigung der zweiten Rahmenstrebe aufweist und **gekennzeichnet durch**
- ein erstes Schwenklager, welches die erste Rahmenstrebe mit der zweiten Rahmenstrebe direkt verbindet,
- ein Verbindungselement, welches an seinem ersten Ende mit der ersten Rahmenstrebe und an seinem zweiten Ende mit der zweiten Rahmenstrebe verbunden ist.

4. Geflügelhalteeinrichtung nach Anspruch 3,
**dadurch gekennzeichnet, dass** das Verbindungselement als Gelenkarm ausgebildet ist und schwenkbar an der ersten und der zweiten Rahmenstrebe befestigt ist.

5. Geflügelhalteeinrichtung nach Anspruch 3 oder 4,
**dadurch gekennzeichnet, dass** an dem Verbindungselement mindestens eine Sitzstange befestigt ist.

6. Geflügelhalteeinrichtung nach einem der vorhergehenden Ansprüche,
**dadurch gekennzeichnet, dass** die Sitzstangeneinrichtung in Einbaulage schwerkraftbetätigt aus der zweiten in die erste Stellung beweglich ist.

7. Geflügelhalteeinrichtung nach Anspruch 6,
**gekennzeichnet durch** eine Sicherungsstrebe, welche die Sitzstangeneinrichtung in der ersten Stellung gegen eine weitere schwerkraftbetätigte Bewegung arretiert.

8. Geflügelhalteeinrichtung nach Anspruch 1,
**dadurch gekennzeichnet, dass** die Aktuatoreinrichtung mit der Sitzstangeneinrichtung mittels eines schlaffen Zugelements gekoppelt ist.

9. Geflügelhalteeinrichtung nach Anspruch 1 oder 8,
**dadurch gekennzeichnet, dass** die Aktuatoreinrichtung einen Elektromotor umfasst, dessen Ausgangswelle eine Bandrolle antreibt, auf der ein Band, welches an der Sitzstangeneinrichtung befestigt ist, bei Rotation des Elektromotors auf- und abgewickelt werden kann.

10. Geflügelhalteeinrichtung nach Anspruch 1,
**dadurch gekennzeichnet, dass** die Steuerungseinheit ausgebildet ist, um die Bewegung aus der ersten in die zweite Stellung innerhalb eines Zeitraums durchzuführen, der nicht kürzer als zwei, vorzugsweise nicht kürzer als fünf Sekunden ist.

11. Geflügelhalteeinrichtung nach einem der vorhergehenden Ansprüche 2 bis 10,
**dadurch gekennzeichnet, dass** die erste und die zweite Rahmenstrebe in einem ersten Strebensatz umfasst sind und **gekennzeichnet durch** einen zweiten Strebensatz, der in Längsrichtung der Sitzstangen beabstandet zu dem ersten Strebensatz angeordnet ist und eine zu dem ersten Strebensatz übereinstimmende Bewegung der Sitzstangeneinrichtung ausführt.

12. Geflügelhalteeinrichtung nach einem der vorhergehenden Ansprüche und Anspruch 2,
**dadurch gekennzeichnet, dass** die zweite Rahmenstrebe eine erste Schwenklagerung an einem ersten Ende aufweist und hiermit schwenkbar an einem den Aufenthaltsbereich begrenzenden Wandabschnitt befestigt ist und die erste Rahmenstrebe an einem ersten Ende schwenkbar mit der zweiten Rahmenstrebe verbunden ist und ein zweites Ende der ersten Rahmenstrebe aus einer abgesenkten Position, in der das zweite Ende auf der ersten oder der zweiten Aufstandsfläche aufliegt, in eine angehobene Position bewegt werden kann, in der das zweite Ende oberhalb und in einem Abstand zu der ersten bzw. zweiten Aufstandsfläche sich befindet.

13. Geflügelhalteeinrichtung nach Anspruch 12,
**dadurch gekennzeichnet, dass** die erste Rahmenstrebe
- in der angehobenen Position durch einen Anschlag zwischen der ersten und der zweiten Rahmenstrebe in einer vorbestimmten Winkelstellung zu der zweiten Rahmenstrebe steht und
- in der abgesenkten Position in einer hiervon abweichenden Winkelstellung zu der zweiten Rahmenstrebe steht.

14. Geflügelhalteeinrichtung nach einem der vorhergehenden Ansprüche,
**dadurch gekennzeichnet, dass** die Sitzstangeneinrichtung oberhalb einer Aufmauerung an einer seitlichen Begrenzungseinrichtung befestigt ist.

15. Geflügelhalteeinrichtung nach einem der vorhergehenden Ansprüche,
**dadurch gekennzeichnet, dass** die Sitzstangeneinrichtung an der Stalldecke oder einer an der Stalldecke befestigten Halterung befestigt ist.

16. Sitzstangeneinrichtung (150) für eine Geflügelhalteeinrichtung, umfassend
- eine Sitzstange (180a-f), und
- eine erste Rahmenstrebe (173, 175, 177), an der die Sitzstange befestigt ist,
wobei die erste Rahmenstrebe beweglich, insbesondere schwenkbar zu einer zweiten Rahmenstrebe (171) gelagert ist und die Sitzstange aus einer ersten Stellung in eine zweite Stellung, in der die Sitzstangeneinrichtung eine kleinere Fläche in horizontaler Richtung überdeckt als in der ersten Stellung, beweglich ist, **gekennzeichnet durch** eine Aktuatoreinrichtung (210), die mit der Sitzstangeneinrichtung gekoppelt ist zur Bewegung der Sitzstangeneinrichtung aus der ersten in die zweite Stellung und umgekehrt und durch eine Steuerungseinheit, welche mit der Aktuatoreinrichtung signaltechnisch gekoppelt ist und ausgebildet ist, um die Sitzstangeneinrichtung abends aus der zweiten Stellung in die erste Stellung zu bewegen und morgens aus der ersten Stellung in die zweite Stellung zu bewegen.

## Claims

1. Poultry keeping facility, comprising:
- at least one laying nest (110),
- a first housing area (120a) having a perforated first floor surface,
- a second housing area (130a) having a second floor surface for spreading litter,
**characterised by**
- a perch system (150) having at least one perch (180a-f) disposed at a height from the first or second floor surface which is movable relative to the first respectively second floor surface, and the perch is movable from a first position into a second position in which the perch system covers a smaller surface area of the first respectively second floor surface than in the first position,
- an actuator device (210) which is coupled with the perch system in order to move the perch system from the first into the second position and vice versa,
- a control unit which is coupled with the actuator device by signal communication and configured to move the perch system from the second position into the first position in the evening and from the first position into the second position in the morning.

2. Poultry keeping facility as claimed in claim 1,
**characterised in that** one of the perches is disposed on a first frame strut which is mounted so as to be movable, in particular pivotable, relative to a second frame strut.

3. Poultry keeping facility as claimed in claim 2,
**characterised in that** the second frame strut has fixing means for securing the second frame strut in a stationary arrangement and **characterised by**
- a first pivot bearing which directly connects the first frame strut to the second frame strut,
- a connecting element which is connected to the first frame strut at its first end and to the second frame strut at its second end.

4. Poultry keeping facility as claimed in claim 3,
**characterised in that** the connecting element is configured as an articulated arm and is pivotably attached to the first and the second frame strut.

5. Poultry keeping facility as claimed in claim 3 or 4,
**characterised in that** at least one perch is attached to the connecting element.

6. Poultry keeping facility as claimed in one of the preceding claims,
**characterised in that** in the installed position, the perch system is movable from the second into the first position by the action of gravitational force.

7. Poultry keeping facility as claimed in claim 6,
**characterised by** a locking strut which locks the perch system in the first position preventing further movement due to the action of gravitational force.

8. Poultry keeping facility as claimed in claim 1,
**characterised in that** the actuator device is coupled with the perch system by means of a slack traction element.

9. Poultry keeping facility as claimed in claim 1 or 8,
**characterised in that** the actuator device comprises an electric motor, the output shaft of which drives a belt roller on which a belt attached to the perch system can be wound and unwound on rotation of the electric motor.

10. Poultry keeping facility as claimed in claim 1,
**characterised in that** the control unit is configured to perform the movement from the first into the second position within a period that is not shorter than two, preferably not shorter than five seconds.

11. Poultry keeping facility as claimed in one of the preceding claims 2 to 10,
**characterised in that** the first and the second frame struts are incorporated in a first set of struts and **characterised by** a second set of struts which is disposed at a distance apart from the first set of struts in the longitudinal direction of the perches and effects a movement of the perch system identical to the first set of struts.

12. Poultry keeping facility as claimed in one of the preceding claims and claim 2,
**characterised in that** the second frame strut has a first pivot bearing at a first end and is thereby pivotably attached to a wall section bounding the housing area and the first frame strut is pivotably connected to the second frame strut at a first end and a second end of the first frame strut can be moved out of a lowered position in which the second end lies on the first or the second floor surface into a raised position in which the second end is located above and at a distance from the first respectively second floor surface.

13. Poultry keeping facility as claimed in claim 12,
**characterised in that** the first frame strut
- sits in a predefined angular position relative to the second frame strut in the raised position due to a stop between the first and the second frame strut and
- sits in a different angular position therefrom relative to the second frame strut in the lowered position.

14. Poultry keeping facility as claimed in one of the preceding claims,
**characterised in that** the perch system is attached to a lateral boundary device above a brick base.

15. Poultry keeping facility as claimed in one of the preceding claims,
**characterised in that** the perch system is attached to the aviary ceiling or to a retaining means attached to the aviary ceiling.

16. Perch system (150) for a poultry keeping facility, comprising
- a perch (180a-f) and
- a first frame strut (173, 175, 177) to which the perch is attached, and the first frame strut is mounted so as to be movable, in particular pivotable, relative to a second frame strut (171) and the perch is movable from a first position into a second position in which the perch system covers a smaller surface area in the horizontal direction than in the first position, **characterised by** an actuator device (210) which is coupled with the perch system in order to move the perch system from the first into the second position and vice versa and by a control unit which is coupled with the actuator device by signal communication and configured to move the perch system from the second position into the first position in the evening and from the first position into the second position in the morning.

## Revendications

1. Système d'élevage avicole, comprenant :
- au moins un nid de ponte (110),
- une première zone de séjour (120a) avec une première surface d'appui perforée,
- une deuxième zone de séjour (130a) avec une deuxième surface d'appui servant à déposer du matériau à répandre,
**caractérisé par**
- un système de perchoir (150), qui présente au moins un perchoir (180a - f) disposé de manière surélevée par rapport à la première ou à la deuxième surface d'appui, qui est mobile relativement à la première ou à la deuxième surface d'appui, dans lequel le perchoir est mobile depuis une première position dans une deuxième position, dans laquelle le système de perchoir recouvre une surface de la première ou de la deuxième surface d'appui plus petite que dans la première position,
- un système actionneur (210), qui est couplé au système de perchoir pour déplacer le système de perchoir depuis la première dans la deuxième position, et inversement,
- une unité de commande, qui est couplée par une technique de signaux au système actionneur et est réalisée pour déplacer le système de perchoir le soir depuis la deuxième position dans la première position et pour le déplacer le matin depuis la première position dans la deuxième position.

2. Système d'élevage avicole selon la revendication 1,
**caractérisé en ce qu'**un des perchoirs est disposé au niveau d'une première entretoise de cadre, laquelle est montée de manière mobile, en particulier de manière à pouvoir pivoter par rapport à une deuxième entretoise de cadre.

3. Système d'élevage avicole selon la revendication 2,
**caractérisé en ce que** la deuxième entretoise de cadre présente des moyens de fixation servant à fixer de manière stationnaire la deuxième entretoise de cadre et **caractérisé par**
- un premier palier pivotant, qui relie directement la première entretoise de cadre à la deuxième entretoise de cadre,
- un élément de liaison, qui est relié au niveau de sa première extrémité à la première entretoise de cadre et au niveau de sa deuxième extrémité à la deuxième entretoise de cadre.

4. Système d'élevage avicole selon la revendication 3,
**caractérisé en ce que** l'élément de liaison est réalisé sous la forme d'un bras d'articulation et est fixé de manière à pouvoir pivoter au niveau de la première et de la deuxième entretoise de cadre.

5. Système d'élevage avicole selon la revendication 3 ou 4,
**caractérisé en ce qu'**au moins un perchoir est fixé au niveau de l'élément de liaison.

6. Système d'élevage avicole selon l'une quelconque des revendications précédentes,
**caractérisé en ce que** le système de perchoir est mobile en position de montage de manière activée par la force de gravité depuis la deuxième dans la première position.

7. Système d'élevage avicole selon la revendication 6,
**caractérisé par** une entretoise de blocage, qui arrête un autre mouvement activé par la force de gravité du système de perchoir dans la première position.

8. Système d'élevage avicole selon la revendication 1,
**caractérisé en ce que** le système actionneur est couplé au système de perchoir au moyen d'un élément de traction lâche.

9. Système d'élevage avicole selon la revendication 1 ou 8,
**caractérisé en ce que** le système actionneur comprend un moteur électrique, dont l'arbre de sortie entraîne un rouleau de bande, sur lequel une bande, qui est fixée au niveau du système de perchoir, peut être enroulée et déroulée lors de la rotation du moteur électrique.

10. Système d'élevage avicole selon la revendication 1,
**caractérisé en ce que** l'unité de commande est réalisée pour effectuer le déplacement depuis la première dans la deuxième position dans un intervalle de temps, qui n'est pas inférieur à 2, de préférence pas inférieur à 5 secondes.

11. Système d'élevage avicole selon l'une quelconque des revendications 2 à 10,
**caractérisé en ce que** la première et la deuxième entretoise de cadre sont comprises dans un premier jeu d'entretoises, et **caractérisé par** un deuxième jeu d'entretoises, qui est disposé de manière espacée par rapport au premier jeu d'entretoises dans le sens longitudinal des perchoirs et exécute un déplacement, coïncidant avec le premier jeu d'entretoises, du système de perchoir.

12. Système d'élevage avicole selon l'une quelconque des revendications précédentes et selon la revendication 2,
**caractérisé en ce que** la deuxième entretoise de cadre présente un premier support pivotant au niveau d'une première extrémité et, de ce fait, est fixée de manière à pouvoir pivoter au niveau d'une section de paroi délimitant la zone de séjour, et la première entretoise de cadre est reliée au niveau d'une première extrémité de manière à pouvoir pivoter à la deuxième entretoise de cadre, et une deuxième extrémité de la première entretoise de cadre peut être déplacée depuis une position abaissée, dans laquelle la deuxième extrémité repose sur la première ou la deuxième surface d'appui, dans une position relevée, dans laquelle la deuxième extrémité se trouve au-dessus de la première ou de la deuxième surface d'appui et à une distance de cette dernière.

13. Système d'élevage avicole selon la revendication 12,
**caractérisé en ce que** la première entretoise de cadre
- se situe dans une position angulaire prédéfinie par rapport à la deuxième entretoise de cadre dans la position relevée par une butée entre la première et la deuxième entretoise de cadre et
- se situe dans une position angulaire s'en écartant par rapport à la deuxième entretoise de cadre dans la position abaissée.

14. Système d'élevage avicole selon l'une quelconque des revendications précédentes, **caractérisé en ce que** le système de perchoir est fixé au-dessus d'un rehaussement au niveau d'un système de délimitation latéral.

15. Système d'élevage avicole selon l'une quelconque des revendications précédentes,
**caractérisé en ce que** le système de perchoir est fixé au niveau du plafond du poulailler ou d'un support fixé au niveau du plafond de poulailler.

16. Système de perchoir (150) pour un système d'élevage avicole, comprenant
- un perchoir (180a - f), et
- une première entretoise de cadre (173, 175, 177), au niveau de laquelle le perchoir est fixé,
dans lequel la première entretoise de cadre est montée de manière mobile, en particulier de manière à pouvoir pivoter par rapport à une deuxième entretoise de cadre (171), et le perchoir est mobile depuis une première position dans une deuxième position, dans laquelle le système de perchoir recouvre une surface dans la direction horizontale plus petite que dans la première position, **caractérisé par** un système actionneur (210), qui est couplé au système de perchoir afin de déplacer le système de perchoir depuis la première dans la deuxième position, et inversement et par une unité de commande, qui est couplée par une technique de signaux au système actionneur et est réalisée pour déplacer le système de perchoir le soir depuis la deuxième position dans la première position et pour le déplacer le matin depuis la première position dans la deuxième position.
